# EUROPEAN PATENT SPECIFICATION

(11) **EP 1 890 190 B1**
(45) Date of publication and mention of the grant of the patent: **08.04.2009**
(21) Application number: 07013592.6
(22) Date of filing: 11.07.2007
(51) Int. Cl.: G03B 21/58, A47G 5/00, G09F 1/10

(54) **Portable screen and portable screen device**
Tragbarer Bildschirm und tragbare Bildschirmvorrichtung
Ecran portable et dispositif à écran portable

(30) Priority: 11.08.2006 JP 2006219330
(43) Date of publication of application: 20.02.2008
(73) Proprietor: ARISAWA MFG. CO., LTD., Joetsu-shi, Niigata-ken (JP)
(72) Inventor: Tanaka, Koji, Joetsu-shi Niigata (JP)
(74) Representative: HOFFMANN EITLE

(56) References cited:
- GB-A- 2 301 880
- JP-A- 2005 070 313
- US-A- 1 467 624
- US-A- 1 723 944
- US-A- 5 960 848

## Description

### FIELD OF THE INVENTION

The present invention relates to a portable screen and to a portable screen device.

### BACKGROUND OF THE INVENTION

Examples of screens onto which image light from a projector or the like is projected include small-sized portable screens that can be wound into a roll for storage, such as the one disclosed in Patent Reference 1.

[Patent Reference 1] Japanese Laid-open Patent Application No. 2005-70313

However, when a screen that can be rolled for storage is used, a fitting must be used for suspending the screen, or a separate stand or the like must be used for fixing the screen when the screen is unrolled against the force with which the screen is rolled into the storage unit. Although sold as portable screens, such screens are still inconvenient to carry and difficult to use, and have not attained consumer acceptance.

Documents GB 2 301 880, US- 5 960 848, US- 1 467 624 and US- 1 723 944 disclose foldable screens made on cardboard.

### SUMMARY OF THE INVENTION

The present invention was developed in view of such drawbacks as those described above, and an object of the present invention is to provide a portable screen and a portable screen device that have an extremely simple structure, can be manufactured at low cost, and can easily be converted to a service state from an unused state in which the screen can be carried, without the need for an accessory.

The present invention will be summarized with reference to the accompanying drawings.

The present invention according to a first aspect is a portable screen comprising a screen part 1 that is capable of changing shape between an upright service state and a folded state, and a support body 2 for making contact with a horizontal mounting surface and supporting the screen part 1 in the upright service state, wherein the screen part 1 is formed from a left screen body 3 and a right screen body 4 that are connected to each other so as to be able to fold together; the support body 2 is formed so that a left connecting part 5 connected to a back surface of the left screen body 3, and a right connecting part 6 connected to a back surface of the right screen body 4 are connected via a base part 7; leg parts 14, 15 that are arranged to make contact with a horizontal mounting surface and protrude from the base part 7 are provided to the support body 2; and the support body 2 is configured so as to fold together with the left screen body 3 and the right screen body 4 when the left screen body 3 and the right screen body 4 are closed to place the screen part 1 in the folded state, and to support the screen part 1 so that the base part 7 separates from a back surface of the screen part 1, and distal end parts 14a, 15a of the leg parts 14, 15 protrude from the surface of the screen part 1 and form a substantial V shape or a substantial U shape as viewed in a plane perpendicular to the plane defined by the left screen body 3 and the right screen body 4 when they are opened to place the screen part 1 in the upright service state.

The portable screen according to a second aspect is the portable screen according to the first aspect, characterized in that a protruding part 9 is provided to the support body 2, and the protruding part 9 makes contact with a back surface of the screen part 1 to prevent the left screen body 3 and the right screen body 4 from naturally closing when the screen part 1 is in the upright service state.

The portable screen according to a third aspect is the portable screen according to any of the first and second aspects, characterized in that a locked part 10 for locking with the protruding part 9 is provided to a back surface of the screen part 1.

The portable screen according to a fourth aspect is the portable screen according to the third aspect, characterized in that the portable screen is configured so that a locked state between the protrusion 9 and the locked part 10 is released in conjunction with folding of the screen part 1 when the screen part 1 is placed in a folded state.

The portable screen according to a fifth aspect is the portable screen according to any of the first through fourth aspects, characterized in that the protrusion 9 is provided so as to be able to flex in relation to the support body 2.

The portable screen according to a sixth aspect is the portable screen according to any, of the first through fifth aspects, characterized in that a diagonal length of an effective screen area of the screen part 1 is 30 inches or less.

The portable screen device according to a seventh aspect is characterized in comprising the portable screen according to any of the first through sixth aspects, and a projector for projecting image light to the screen part 1.

The present invention configured as described above provides a portable screen and a portable screen device that have an extremely simple structure, can be manufactured at low cost, and can easily be converted to a service state from an unused state in which the screen can be carried, without the need for an accessory.

### BRIEF DESCRIPTION OF THE DRAWINGS

FIG. 1 is a schematic perspective view showing the surface side in the upright service state of the present example;
FIG. 2 is an enlarged schematic perspective view showing the back side in the folded state of the present example; and
FIG. 3 is an enlarged schematic perspective view showing the back side in the upright service state of the present example.

### DETAILED DESCRIPTION OF THE INVENTION

Preferred embodiments of the present invention will be briefly described by describing the operation of the present invention based on the accompanying drawings.

When the screen part 1 composed of the left screen body 3 and the right screen body 4 is opened from the twofold folded state so as to stand in the upright service state, the support body 2 (base part 7 and leg parts 14, 15) that was folded together with the screen part 1 also opens together with the screen part 1, and the base part 7 moves a prescribed distance away from the back surface of the screen part 1 while the distal end parts 14a, 15a of the leg parts 14, 15 protrude from' the surface of the screen part 1 and form a substantial V shape or a substantial U shape as viewed in a plane. The screen part 1 is therefore stably supported.

Specifically, the leg parts 14, 15 of the support body 2 intersect with the edges of the lower end of the screen part 1, tilting towards the surface side of the screen part 1 is prevented by the distal end parts 14a, 15a that protrude from the surface, and tilting towards the back surface of the screen part 1 is prevented by the base part 7, which is in a substantial V shape or substantial U shape as viewed in a plane and moves a prescribed distance away from the back surface.

When the screen part 1 is folded in two from the upright service state to the folded state, the support body 2 is folded together with the screen part 1 (the base part 7 folds together on the back surfaces of the folded left screen body 3 and right screen body 4, and the leg parts 14, 15 come together in a position outside the folded screen part 1), and the screen is made easier to carry.

Consequently, the present invention provides excellent portability in which there is no need for preparing or attaching a separate accessory, and the screen can easily be converted between an upright service state and a folded state.

### [Examples]

Specific examples of the present invention will be described based on the drawings.

The present example is a portable screen composed of a screen part 1 that is capable of changing shape between an upright service state and a folded state, and a support body 2 for making contact with a mounting surface and supporting the screen part 1 in the upright service state, wherein the screen part 1 is formed from a left screen body 3 and a right screen body 4 that are connected to each other so as to be able to fold together; the support body 2 is formed so that a left connecting part 5 connected to a back surface of the left screen body 3, and a right connecting part 6 connected to a back surface of the right screen body 4 are connected via a base part 7; leg parts 14, 15 that make contact with a mounting surface and protrude from the base part 7 are provided to the support body 2; and the support body 2 is configured so as to fold together with the left screen body 3 and the right screen body 4 when the left screen body 3 and the right screen body 4 are closed to place the screen part 1 in the folded state, and to support the screen part 1 so that the base part 7 separates from a back surface of the screen part 1, and distal end parts 14a, 15a of the leg parts 14, 15 protrude from a surface of the screen part 1 and form a substantial V shape or a substantial U shape as viewed in a plane with respect to the substantially linear screen part 1 as viewed in a plane when the left screen body 3 and the right screen body 4 are opened to place the screen part 1 in the upright service state.

Specifically, the present example is a small-sized portable screen in which the diagonal length of the effective screen area of the screen part 1 is 30 inches or less, and the portable screen is used as a portable screen device together with a projector for projecting image light onto the screen part 1.

Each component will be specifically described.

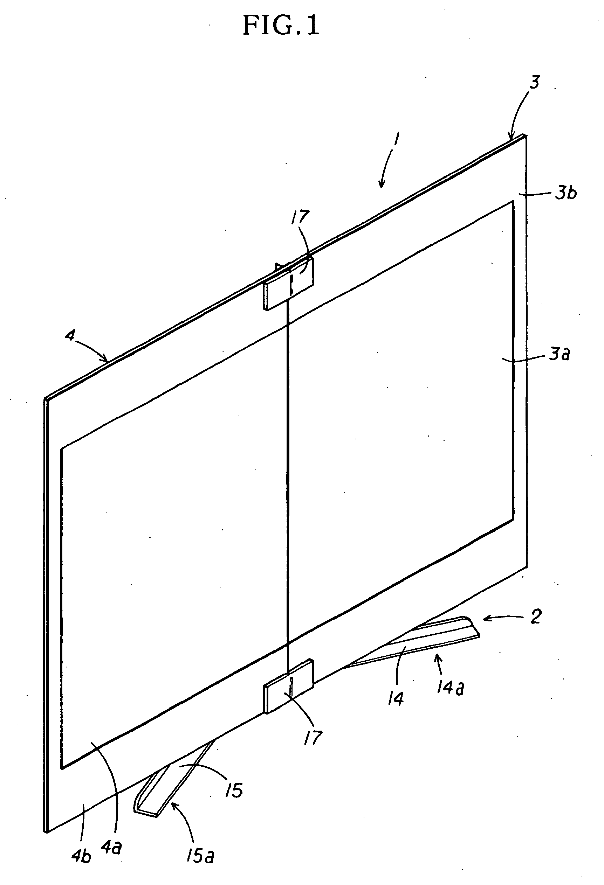

The screen part 1 is composed of a left screen body 3 and a right screen body 4. Specifically, as shown in FIG. 1, the left screen body 3 is composed of a left screen panel 3a, and a left frame body 3b that is provided to the external periphery of the surface of the left screen panel 3a. The left frame body 3b is formed substantially in a horseshoe shape that is open toward a right screen panel 4a as viewed from the front. The right screen body 4 is composed of a right screen panel 4a, and a right frame body 4b that is provided to the external periphery of the surface of the right screen panel 4a. The right frame body 4b is formed substantially in a horseshoe shape that is open toward the left screen panel 3a as viewed from the front.

The left and right directions in the present example are based on a state in which the screen part 1 is viewed from the back surface (the opposite side from the surface on which the image is displayed).

The left screen panel 3a and the right screen panel 4a are each formed by laminating a front material, a middle material, and a back material using an adhesive. Publicly known materials may be used as the front material, the middle material, the back material, and the adhesive. In the present example, the screen described in Japanese Patent No. 3103802 is used as the front material, polyethylene terephthalate film is used as the middle material, an aluminum panel is used as the back material, and a urethane-based adhesive is used as the adhesive. A synthetic resin composed of polypropylene or the like is used to form the left frame body 3b and the right frame body 4b.

The left screen body 3 and the right screen body 4 are connected to each other via a panel hinge member 17 made of a synthetic resin that allows opening and closing between a closed state and a state of opening at an angle of approximately 180°. The panel hinge member 17 is connected to upper and lower end parts, i.e., the left frame body 3b and the right frame body 4b, that are not part of the image display on the surface of the screen part 1.

Tape 11 is affixed to the back surface between the left screen body 3 and the right screen body 4 so that a standing part 11a emerges when the screen part 1 is placed in the upright state. The tape 11 makes it possible to prevent light from leaking towards an observer from (the gap) between the left screen body 3 and the right screen body 4 when an image is being viewed during the upright service state, and to prevent fingers from being caught between the left screen body 3 and the right screen body 4 during opening and closing.

Accordingly, when the screen part 1 is folded together so that the surface of the left screen body 3 and the surface of the right screen body 4 are brought together, the screen surfaces are prevented from touching each other by the left frame body 3b and the right frame body 4b, and the screen surfaces are not easily damaged. As an alternative to the frame bodies that use the panel hinge member 17 described above, the left frame body 3b and the right frame body 4b may be integrated with each other, and a frame body that has a crease in the center of the frame body may be used. The number of components can thereby be reduced, and the structure of the screen can be simplified.

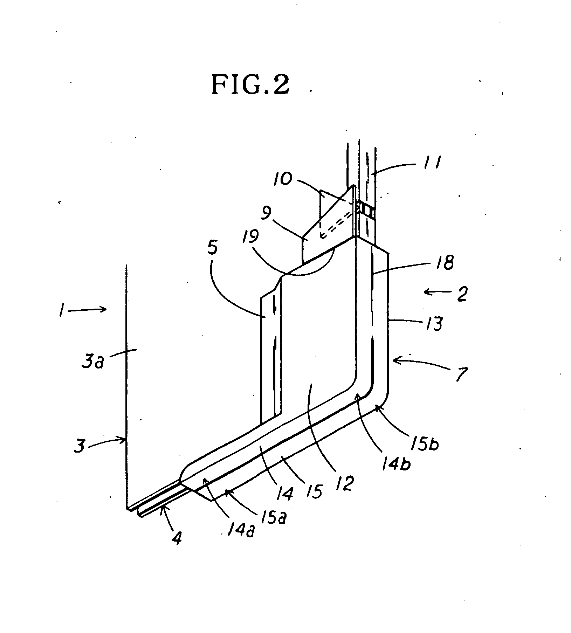

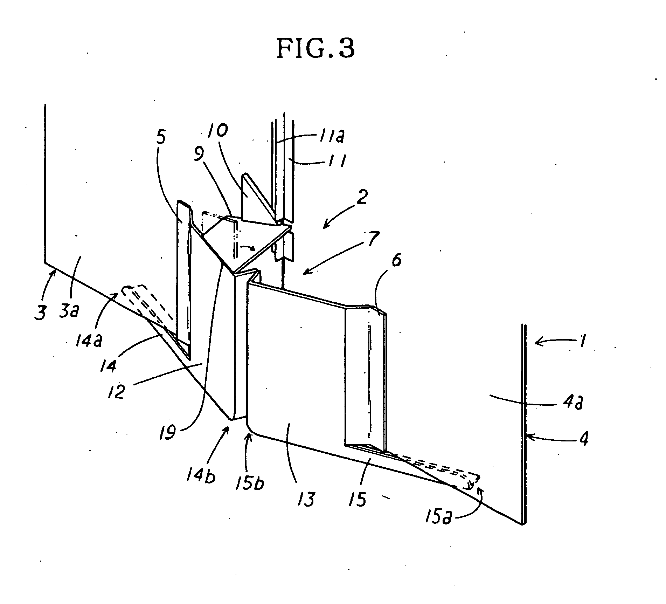

As shown in FIGS. 2 and 3, a support body 2 composed of a sheet material made of polypropylene or another synthetic resin having an appropriate rigidity is provided to the back surface of the screen part 1.

Specifically, the support body 2 is configured so that the left connecting part 5 fixed to the back surface of the left screen panel 3a of the screen part 1, and the right connecting part 6 fixed to the back surface of the right screen panel 4a are connected to each other via the base part 7, and leg parts 14, 15 are provided in protruding fashion to the lower part of the support body 2. Specifically, the left end part of the base part 7 is fixed to the left connecting part 5, and the right end part of the base part 7 is fixed to the right connecting part 6. The base part 7, the left connecting part 5, and the right connecting part 6 may also be formed so as to be separate.

A crease 18 that is capable of folding together with the screen part 1 when the screen part 1 is placed in the folded state is formed in the base part 7 of the support body 2. Specifically, in the base part 7 of the support body 2, a left side 12 having the left connecting part 5 is connected so as to be able to flex via the crease 18 to a right side 13 having the right connecting part 6, and cross-sectionally L-shaped left and right leg parts 14, 15 that make contact with the mounting surface are provided in protruding fashion to the lower part of the left side 12 and the right side 13. A configuration is adopted whereby the upper edges of the distal end portions of the leg parts 14, 15 do not come in contact with the lower edges of the left screen body 3 and the right screen body 4.

The left side 12 and the right side 13 of the base part 7 may be integrally formed, or may be connected using the hinge member or the like after being separately formed.

As shown in FIG. 2, the crease 18 is provided to the back surface of the left screen panel 3a and the right screen panel 4a of the screen part 1 so as to extend perpendicular to the base part 7 and substantially coincide with the crease of the tape 11.

Accordingly, when the screen part 1 is placed in the folded state, the support body 2 is folded together with the screen part 1 as shown in FIG. 2. Specifically, the base part 7 (the left side 12 and the right side 13) comes together with the back surface of the screen part 1, and the leg parts 14, 15 come together in a position (bottom position) outside the screen part 1.

When the screen part 1 is placed in the upright service state, the base part 7 separates from the back surface of the screen part 1. At this time, the distal end parts 14a, 15a of the leg parts 14, 15 protrude from the surface of the screen part 1, and the proximal end parts 14b, 15b of the leg parts 14, 15 move away from the back surface of the screen part 1.

As described above, when the screen part 1 is opened, the base part 7 moves away from the back surface of the screen part 1 while opening, the distal end parts 14a, 15a of the leg parts 14, 15 protrude from the surface of the screen part 1, and the edges of the lower ends of the leg parts 14, 15 make contact with the mounting surface in a substantial V shape as viewed in a plane, whereby the screen part 1 can be stably placed upright.

In the present example, the edges of the lower end of the screen part 1 do not come in contact with the mounting surface. However, since the lower end parts of the leg parts 14, 15 are in planar contact with the mounting surface as described above, the screen part 1 can be stably supported.

A folded-in part 9 (protruding part 9) is connected to the upper end of the base part 7 of the support body 2. Specifically, the folded-in part 9 and the base part 7 are connected to each other via a crease 19 that extends substantially horizontally (to the left and right) in relation to the mounting surface. The folded-in part 9 can therefore fold in towards the back surface of the screen part 1 from the crease 19.

A locked part 10 (shoulder) for locking with the edge of the distal end of the folded-in part 9 when the folded-in part 9 is folded in towards the back surface of the screen part 1 is provided to the back surface of the screen part 1.

Accordingly, in the present example, when the screen part 1 is placed in the upright service state as shown in FIG: 3, the folded-in part 9 is folded in towards the back surface of the screen part 1 from the crease 19, and the edge of the distal end of the folded-in part 9 is locked in the locked part 10, the folded-in part 9 can be fixed in a folded-in state as shown in FIG. 3.

An extremely simple operation thus prevents the left screen body 3 and the right screen body 4 from naturally closing, the state of protrusion of the distal end parts 14a, 15a of the leg parts 14, 15 from the surface of the screen part 1, and the state of separation of the base part 7 (proximal end parts 14b, 15b of the leg parts 14, 15) from the back surface of the screen part 1 can be satisfactorily maintained, and the upright state of the screen part 1 can be stably maintained.

Since the locking of the folded-in part 9 and the locked part 10 in the present example is accomplished merely by locking the distal edge of the folded-in part 9 in the locked part 10 (shoulder), the locking of the folded-in part 9 with the locked part 10 is released in conjunction with the folding together of the screen part 1 when the screen part 1 in the upright service state is folded together into the folded state.

According to the configuration described above, when the screen part 1 composed of the left screen body 3 and the right screen body 4 is opened from the twofold folded state so as to stand in the upright service state in the present example, the support body 2 (the base part 7 and the leg parts 14, 15) folded together with the screen part 1 also opens, and the base part 7 moves a prescribed distance away from the back surface of the screen part 1 while the distal end parts 14a, 15a of the leg parts 14, 15 protrude from the surface of the screen part 1 to form a substantial V shape or a substantial U shape as viewed in a plane. The screen part 1 is therefore stably supported.

Specifically, the leg parts 14, 15 of the support body 2 intersect with the lower edges of the screen part 1, tilting of the screen part 1 towards the surface side is prevented by the distal end parts 14a, 15a protruding from the surface, and tilting of the screen part 1 towards the back surface side is prevented by the base part 7, which is in a substantial V shape or a substantial U shape as viewed in a plane and moves a prescribed distance away from the back surface.

When the screen part 1 is folded in two from the upright service state to the folded state, the support body 2 is folded together with the screen part 1 (the base part 7 folds together on the back surfaces of the folded left screen body 3 and right screen body 4, and the leg parts 14, 15 come together in a position outside the folded screen part 1), and the screen is folded like a thin file and made easier to carry.

Consequently, the present invention provides excellent portability in which there is no need for preparing or attaching a separate accessory, and the screen can easily be converted between an upright service state and a folded state merely by providing a support body composed of a synthetic resin to the back surface of the screen part.

## Claims

1. A portable screen comprising:
a screen part (3) that is capable of changing shape between an upright service state and a folded state; and
a support body (2) arranged to make contact with a horizontal mounting surface and supporting the screen part in the upright service state; wherein
the screen part is formed from a left screen body (3) and a right screen body (4) that are connected to each other so as to be able to fold together;
the support body is formed so that a left connecting part (5) connected to a back surface of the left screen body, and a right connecting part (6) connected to a back surface of the right screen body are connected via a base part (7);
leg parts (14,15) that are arranged to make contact with a horizontal mounting surface and protrude from the base part are provided to the support body; and
the support body (2) is configured so as to fold together with the left screen body and the right screen body when the left screen body and the right screen body are closed to place the screen part in the folded state, and to support the screen part so that the base part separates from a back surface of the screen part, and distal end parts (14a,15a) of the leg parts protrude from the surface of the screen part and form a substantial V shape or a substantial U shape as viewed in a plane perpendicular to the plane defined by the left screen body and the right screen body when they are opened to place the screen part in the upright service state.

2. The portable screen according to claim 1, wherein
a protruding part is provided to the support body; and
the protruding part makes contact with a back surface of the screen part to prevent the left screen body and the right screen body from naturally closing when the screen part is in the upright service state.

3. The portable screen according to any of claims 1 and 2, wherein a locked part for locking with the protruding part is provided to a back surface of the screen part.

4. The portable screen according to claim 3, wherein the portable screen is configured so that a locked state between the protrusion and the locked part is released in conjunction with folding of the screen part when the screen part is placed in a folded state.

5. The portable screen according to any of claims 1 through 4, wherein the protrusion is provided so as to be able to flex in relation to the support body.

6. The portable screen according to any of claims 1 through 5, wherein a diagonal length of an effective screen area of the screen part is 30 inches or less.

7. A portable screen device comprising:
the portable screen according to any of claims 1 through 6; and
a projector for projecting image light to the screen part.

## Patentansprüche

1. Tragbare Leinwand umfassend:
einen Leinwandteil (3), der eine Gestalt zwischen einem aufrechten Betriebszustand und einem eingeklappten Zustand ändern kann, und
einen Stützkörper (2), der einen Kontakt mit einer horizontalen Aufbaufläche herstellen und den Leinwandteil in einem aufrechten Betriebszustand stützen kann, wobei
der Leinwandteil aus einem linken Leinwandkörper (3) und einem rechten Leinwandkörper (4) ausgebildet ist, die miteinander verbunden sind, um zusammenklappen zu können,
der Stützkörper derart ausgebildet ist, dass ein mit einer Rückfläche des linken Leinwandkörperteils verbundener linker Verbindungsteil (5) und ein mit einer Rückfläche des rechten Leinwandkörperteils verbundener rechter Verbindungsteil (6) über ein Basisteil (7) verbunden sind,
Fußteile (14, 15), die einen Kontakt mit einer horizontalen Aufbaufläche herstellen und vom Basisteil auskragen können, am Stützkörper bereitgestellt sind, und
der Stützkörper (2) eingerichtet ist, um mit dem linken Leinwandkörper und dem rechten Leinwandkörper zusammenzuklappen, wenn der linke Leinwandkörper und der rechte Leinwandkörper geschlossen werden, um den Leinwandteil in den eingeklappten Zustand zu platzieren, und den Leinwandteil derart zu stützen, dass sich das Basisteil von der Rückfläche des Leinwandteils trennt, und Außenendteile (14a, 15a) der Fußteile von der Fläche des Leinwandteils auskragen und eine wesentliche V-Gestalt oder eine wesentliche U-Gestalt ausbilden, wenn in einer Ebene betrachtet, welche Ebene zu der durch den linken Leinwandkörper und den rechten Leinwandkörper definierten Ebene senkrecht ist, wenn diese geöffnet sind, um den Leinwandteil in den aufrechten Betriebszustand zu platzieren.

2. Tragbare Leinwand gemäß Anspruch 1, bei der
ein auskragender Teil am Stützkörper vorgesehen ist, und der auskragende Teil einen Kontakt mit einer Rückfläche des Leinwandteils herstellt, um den linken Leinwandteil und den rechten Leinwandteil daran zu hindern, sich selbstständig zu schließen, wenn sich der Leinwandteil in dem aufrechten Betriebszustand befindet.

3. Tragbare Leinwand gemäß einem der Ansprüche 1 oder 2, bei der ein gesperrter Teil zum Sperren mit dem auskragenden Teil an einer Rückfläche des Leinwandteils vorgesehen ist.

4. Tragbare Leinwand gemäß Anspruch 3, bei welcher
die tragbare Leinwand derart eingerichtet ist, dass ein gesperrter Zustand zwischen der Auskragung und dem gesperrten Teil in Verbindung mit einem Einklappen des Leinwandteils gelöst wird, wenn der Leinwandteil in einem eingeklappten Zustand platziert wird.

5. Tragbare Leinwand gemäß einem der Ansprüche 1 bis 4, bei welcher die Auskragung derart vorgesehen ist, um sich in Relation zum Stützkörper biegen zu können.

6. Tragbare Leinwand gemäß einem der Ansprüche 1 bis 5, bei der eine diagonale Länge eines effektiven Leinwandgebiets des Leinwandteils 30 inches oder weniger beträgt.

7. Tragbare Leinwandvorrichtung umfassend:
die tragbare Leinwand gemäß einem der Ansprüche 1 bis 6, und
einen Projektor zum Projektieren von Bildlicht zum Leinwandteil.

## Revendications

1. Ecran portable comprenant :
une partie (3) formant écran dont la forme peut passer d'un état relevé de fonctionnement à un état rabattu et inversement et
un corps de support (2) agencé pour être en contact avec une surface horizontale de montage et supportant la partie formant écran quand elle est dans l'état relevé de fonctionnement, dans lequel :
la partie formant écran est constituée d'un corps gauche (3) et d'un corps droit (4) reliés l'un à l'autre de manière à pouvoir se rabattre l'un sur l'autre,
le corps de support est configuré de telle sorte qu'une partie gauche de raccordement (5) reliée à une surface arrière du corps gauche de l'écran et une partie droite (6) de raccordement raccordée à une surface arrière du corps droit de l'écran sont raccordées par l'intermédiaire d'une partie de base (7),
des parties (14, 15) en forme de pied agencées de manière à être en contact avec une surface horizontale de montage et qui débordent de la partie de base sont prévues sur le corps de support et
le corps de support (2) est configuré de manière à se rabattre avec le corps gauche de l'écran et le corps droit de l'écran lorsque le corps gauche de l'écran et le corps droit de l'écran sont fermés pour mettre la partie formant écran dans l'état rabattu et pour supporter la partie formant écran de telle sorte que la partie de base se sépare de la surface arrière de la partie formant écran et que les parties (14a, 15a) d'extrémité distale des parties en forme de pied débordent de la surface de la partie formant écran et ont essentiellement une forme de V ou essentiellement une forme de U lorsqu'on les regarde dans un plan perpendiculaire au plan défini par le corps gauche de l'écran et le corps droit de l'écran lorsqu'ils sont ouverts pour placer les parties de l'écran dans l'état relevé de fonctionnement.

2. Ecran portable selon la revendication 1, dans lequel :
une partie en saillie est prévue pour supporter le corps et
la partie en saillie est en contact avec une surface arrière de la partie formant écran pour empêcher le corps gauche de l'écran et le corps droit de l'écran de se fermer d'eux-mêmes lorsque la partie formant écran est dans l'état relevé de fonctionnement.

3. Ecran portable selon l'une quelconque des revendications 1 ou 2, dans lequel une partie verrouillée qui peut se verrouiller sur la partie en saillie est prévue sur la surface arrière de la partie formant écran.

4. Ecran portable selon la revendication 3, dans lequel l'écran portable est configuré de manière à être dans un état verrouillé entre la partie en saillie et la partie verrouillée lors du rabattement de la partie formant écran lorsque la partie formant écran est placée dans l'état rabattu.

5. Ecran portable selon l'une quelconque des revendications 1 à 4, dans lequel la partie en saillie est prévue pour s'infléchir par rapport au corps de support.

6. Ecran portable selon l'une quelconque des revendications 1 à 5, dans lequel la longueur de la diagonale de la surface efficace de l'écran de la partie formant écran est de 30 pouces ou moins.

7. Dispositif à écran portable comprenant :
l'écran portable selon l'une quelconque des revendications 1 à 6 et
un projecteur qui projette de la lumière d'image sur la partie formant écran.
